# EUROPEAN PATENT SPECIFICATION

(11) **EP 3 163 504 B1**
(45) Date of publication and mention of the grant of the patent: **02.01.2019**
(21) Application number: 16195231.2
(22) Date of filing: 24.10.2016
(51) Int. Cl.: G06K 9/00, G06K 9/20, G06K 9/46, G06K 9/34

(54) **METHOD, DEVICE AND COMPUTER-READABLE MEDIUM FOR REGION EXTRACTION**
VERFAHREN, VORRICHTUNG UND COMPUTERLESBARES SPEICHERMEDIUM FÜR BEREICHSEXTRAKTION
PROCÉDÉ, DISPOSITIF ET SUPPORT LISIBLE PAR ORDINATEUR POUR LA RÉGION D'EXTRACTION

(30) Priority: 30.10.2015 CN 201510726272
(43) Date of publication of application: 03.05.2017
(73) Proprietor: Xiaomi Inc., Beijing 100085 (CN)
(72) Inventor: LONG, Fei, Haidian District, Beijing 100085 (CN); ZHANG, Tao, Haidian District, Beijing 100085 (CN); CHEN, Zhijun, Haidian District, Beijing 100085 (CN)
(74) Representative: Reeve, Nicholas Edward

(56) References cited:
- CN-A- 102 955 941
- CN-A- 103 488 984
- YANYUN CHENG ET AL: "ID numbers recognition by local similarity voting", SYSTEMS MAN AND CYBERNETICS (SMC), 2010 IEEE INTERNATIONAL CONFERENCE ON, IEEE, PISCATAWAY, NJ, USA, 10 October 2010 (2010-10-10), pages 3881-3888, XP031805716, DOI: 10.1109/ICSMC.2010.5641766 ISBN: 978-1-4244-6586-6

## Description

### FIELD

The present disclosure generally relates to the technical field of image processing, and more particularly to method, device and computer-readable medium for region extraction.

### BACKGROUND

Automatic recognition of an identity card involves technology for recognizing character (text) information on the identity card by image processing.

Related technology provides a method for automatic recognition of an identity card, the method involves scanning the identity card by an identity card scanning device in a fixed relative position to obtain a scanned image of the identity card; performing a character recognition on the characters of predefined *n* areas in the scanned image to obtain information about at least one of name, gender, nationality, date of birth, address and civil identity number. However, it is difficult to identify the image of the identity card obtained directly by photographing.

CN103488984A discloses a method and a device for identifying second-generation identity cards based on intelligent mobile equipment. The method comprises the following steps: acquiring an image of a second-generation identity card by a camera; performing gray calculation and binarization processing on the image of the second-generation identity card to acquire binary image data; horizontally projecting the binary image data to acquire each black block; acquiring the region of citizen identification number information according to the black blocks; acquiring the name information region and the address information region according to a preset second-generation identity card template. According to the method, when the second-generation identity card image is processed, gray calculation, binarization processing, horizontal projection, vertical projection, relative coordinate position and other basic algorithms are used, and the algorithms can run in the intelligent mobile equipment.

The paper by YUNYAN CHENG ET AL titled "ID numbers recognition by local similarity voting" discloses a technique for recognizing ID numbers from three types of valid identification documents in China, the first generation ID card, the second generation ID card, and the driver license of a motor vehicle.

CN102955941A discloses an identity information recording method and an identity information recording device, and belongs to the field of image processing. The method comprises the following steps of: reading a scanned image of an identity card copy, and positioning a region in which identity card numbers are positioned; and determining information regions in the scanned image of the identity card copy according to the region in which the identity card numbers are positioned, and identifying the information regions to obtain identity information contained by the identity card copy. By using the identity information recording method, the influence of bottom lines on the identity card copy can be eliminated by fuzzy processing; and other identity information on the identity card copy is extracted according to the obtained positions of the identity card numbers, so that the identity information on the identity card copy can be read, and the identity card copy can be independently identified during batch processing of other tickets.

### SUMMARY OF THE INVENTION

In view of the fact in related arts, a method, a device and a computer-readable medium for region extraction are provided in the disclosure. The technical solutions are as follows.

In a first aspect, the invention provides a computer implemented method for region extraction, comprising: obtaining a region position of a first information region in a credential image, wherein the first information region is a region having text information; determining a second information region according to the region position of the first information region; segmenting the second information region to obtain at least one character zone, wherein the segmenting the second information region to obtain at least one character zone comprises: performing binarization processing on the second information region to obtain a binarized second information region; calculating a first histogram of the second information region in a horizontal direction, wherein the first histogram includes: a vertical coordinate of each row of pixels and an accumulative value of foreground color pixels in each row of pixels; recognizing n rows of text regions based on consecutive row sets in the first histogram, wherein each of the consecutive row sets is composed of rows in which the accumulative values of foreground color pixels are larger than a first threshold, wherein n is a positive integer; recognizing a row spacing between two adjacent rows of text regions based on the consecutive row sets in the first histogram; discarding a row of a text region closer to either an upper edge or a lower edge of the second information region in the case of the row spacing being larger than a third threshold, characterized in that segmenting the second information region to obtain at least one character zone further comprises: calculating a second histogram for an i-th row of text region in a vertical direction, wherein the second histogram includes: a horizontal coordinate of each column of pixels and an accumulative value of foreground color pixels in each column of pixels, wherein n≥i≥1 and i is a positive integer; and recognizing nᵢ character zones based on consecutive column sets in the second histogram, wherein each of the consecutive column sets is composed of columns in which the accumulative values of foreground color pixels are larger than a second threshold; recognizing a character spacing between two adjacent character zones based on the consecutive column sets in the second histogram; recognizing a character zone on the right of the two adjacent character zones as the first character zone in a current row of text region if the two adjacent character zones are on the left of the second information region and the character spacing between the adjacent character zones is larger than a fourth threshold; and recognizing a character zone on the left of the two adjacent character zones as the last character zone in the current row of text region if the two adjacent character zones are on the right of the second information region and the character spacing between the adjacent character zones is larger than a fifth threshold.

In a second aspect, the invention provides a device for region extraction, comprising: an obtaining module, configured to obtain a region position of a first information region in a credential image, wherein the first information region is a region having text information; a determination module, configured to determine a second information region according to the region position of the first information region; and a recognition module, configured to segment the second information region to obtain at least one character zone, the recognition module comprising: a binarization sub-module, configured to perform binarization processing on the second information region to obtain a binarized second information region, prior to the step of calculating the first and/or second histograms; a first calculation sub-module, configured to calculate a first histogram of the second information region in a horizontal direction, wherein the first histogram includes: a vertical coordinate of each row of pixels and an accumulative value of foreground color pixels in each row of pixels; a row recognition sub-module, configured to recognize n rows of text regions based on consecutive row sets in the first histogram, wherein each of the consecutive row sets is composed of rows in which the accumulative values of foreground color pixels are larger than a first threshold, wherein n is a positive integer; a row spacing recognition module, configured to recognize a row spacing between two adjacent rows of text regions based on the consecutive row sets in the first histogram; a discarding module, configured to discard a row of text region closer to either an upper edge or a lower edge of the second information region in the case of the row spacing being larger than a third threshold, characterized in that the recognition module further comprises: a second calculation sub-module, configured to calculate a second histogram for an i-th row of text region in a vertical direction, wherein the second histogram includes: a horizontal coordinate of each column of pixels and an accumulative value of foreground color pixels in each column of pixels, wherein n≥i≥1 and i is a positive integer; and a character recognition sub-module, configured to recognize nᵢ character zones based on consecutive column sets in the second histogram, wherein each of the consecutive column sets is composed of columns in which the accumulative values of foreground color pixels are larger than a second threshold; a character spacing recognition module, configured to recognize a character spacing between two adjacent character zones based on the consecutive column sets in the second histogram; a text recognition module, configured to recognize a character zone on the right of the two adjacent character zones as the first character zone in a current row of text region if the two adjacent character zones are on the left of the second information region and the character spacing between the adjacent character zones is larger than a fourth threshold; and a single character recognition module, configured to recognize a character zone on the left of the two adjacent character zones as the last character zone in the current row of text region if the two adjacent character zones are on the right of the second information region and the character spacing between the adjacent character zones is larger than a fifth threshold.

The technical solutions provided in the embodiments of the disclosure may include the following effects:

Embodiments of the disclosure may provide at least some of the following beneficial effects: problems in related art are solved that it is difficult to recognize identity card information in an identity card image obtained directly by photographing and that the positioning of identity card information are inaccurate by obtaining a region position of a first information region in a credential image; determining a second information region according to the region position of the first information region; and segmenting the second information region to obtain at least one character zone. By determining the second information region based on the region position of the first information region in the credential image and segmenting the second information region, the positioning of the second information region and the recognition of a character zone in the second information region can be accurately.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flow chart showing a method for region extraction according to an exemplary embodiment.
FIG. 2A is a flow chart showing a method for region extraction according to another exemplary embodiment.
FIG. 2B is a flow chart showing a method for region extraction according to another exemplary embodiment.
FIG. 2C is a schematic diagram showing the determination of a lower edge of an address information region according to an exemplary embodiment.
FIG. 2D is a schematic diagram showing the determination of an upper edge of an address information region according to an exemplary embodiment.
FIG. 2E is a schematic diagram showing the determination of a left edge of an address information region according to an exemplary embodiment.
FIG. 2F is a schematic diagram showing the determination of a right edge of an address information region according to an exemplary embodiment.
FIG. 2G is a schematic diagram showing the determination of an address information region according to an exemplary embodiment.
FIG. 3A is a flow chart showing a method for region extraction according to another exemplary embodiment.
FIG. 3B is a schematic diagram showing the binarization of the second information region according to an exemplary embodiment.
FIG. 3C is a schematic diagram showing the calculation of a first histogram at a horizontal direction according to an exemplary embodiment.
FIG. 3D is a schematic diagram showing a set of continuation lines according to an exemplary embodiment.
FIG. 3E is a schematic diagram showing the calculation of a second histogram at a vertical direction according to an exemplary embodiment.
FIG. 3F is a schematic diagram showing a set of continuation columns according to an exemplary embodiment.
FIG. 4A is a flow chart showing a method for region extraction according to another exemplary embodiment.
FIG. 4B is a schematic diagram showing a line spacing between two adjacent lines of text regions according to an exemplary embodiment.
FIG. 5A is a flow chart showing a method for region extraction according to another exemplary embodiment.
FIG. 5B is a schematic diagram showing a line spacing between two adjacent lines of text regions according to another exemplary embodiment.
FIG. 6 is a block diagram showing a device for region extraction according to an exemplary embodiment.
FIG. 7 is a block diagram showing a device for region extraction according to another exemplary embodiment.
FIG. 8 is a block diagram showing a device for region extraction according to another exemplary embodiment.
FIG. 9 is a block diagram showing a device for region extraction according to another exemplary embodiment.
FIG. 10 is a block diagram showing a device for region extraction according to another exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

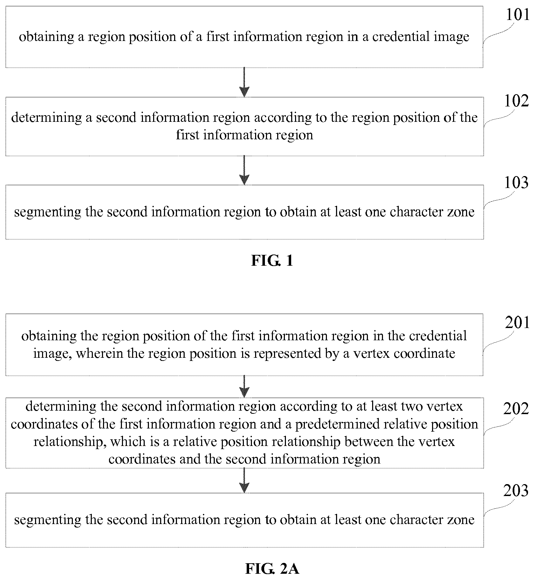

FIG. 1 is a flow chart showing a method for region extraction according to an exemplary embodiment. As illustrated in FIG. 1, the method for region extraction may include the following steps.

In step 101, a region position of a first information region in a credential image is obtained.

The credential image is an image taken directly by photographing or scanning the credential, such as an image of an identity card, an image of a social security card image and the like.

The first information region refers to the region carrying text information, for example at least one of name information region, data of birth region, gender region, address information region, civil identity number information region, number information region, authority of issue, date of expiry region and the like. The position of the first information region relative to the image of the credential image may be measured in advance for the particular credential or otherewise known, and then input into a storage device for reference during the step of obtaining the region position of the first region position. The position may be stored as dimensions, measured in mm for example relative to one of the edges of the image, pixels, or as a percentage of the whole image.

In step 102, a second information region is determined according to the region position of the first information region. The second information region may be determined looking up the relative position of the second information region relative to the first position once this has been identified. Again, the relative position of the second information region may be measured in advance or otherwise known, and then input into a storage device for reference during the step of obtaining the second region position. The position may be stored as dimensions, measured in mm for example relative to one of the edges of the image, pixels, or as a percentage of the whole image.

Alternatively, the positioning of the second information region is more difficult than the positioning of the first information region.

In the step 103, the second information region is segmented to obtain at least one character zone.

To sum up, the method for region extraction provided in the embodiment of the disclosure, by obtaining a region position of a first information region in a credential image; determining a second information region according to the region position of the first information region; and segmenting the second information region to obtain at least one character zone, may solve the problems that in the related art the recognition of some information regions in a credential image photographed directly is difficult to implement and the positioning of some information regions is inaccurate, and may provide the following effects: namely, determining the second information region based on the region position of the first information region in a credential image, and segmenting the second information region, thus precisely positioning the second information region and recognizing the character zone in the second information region.

FIG. 2A is a flow chart showing a method for region extraction according to an exemplary embodiment. As illustrated in FIG. 2A, the method for region extraction may include the following steps.

In step 201, the region position of the first information region in the credential image is obtained, wherein the region position is represented by vertex coordinate pair.

The credential image is the image taken by directly photographing the credential, such as an identity card image, a social security card image, etc. Alternatively, while photographing a credential image, a rectangular region for guiding the photographing is set in the photographing interface. When aiming the rectangular region at the credential, a user may photograph a credential image.

The terminal may obtain the region position of the first information region in the credential image and obtain vertex coordinate pair of respective vertexes in the first region position according to the region position of the first information region. In other words, the region position is represented by vertex coordinate pair.

For example, taking the top left corner of the credential image as the origin, the upper edge as the positive axis of the horizontal coordinate x, the left edge as the positive axis of the vertical coordinate y to establish a Cartesian coordinates, according to positions of respective vertexes in the Cartesian coordinates, vertex coordinate pair corresponding to respective vertexes may be obtained, and the region position of the first information region is represented by the vertex coordinate pair.

In step 202, the second information region is determined according to at least two vertex coordinate pairs of the first information region and a predetermined relative position relationship, wherein the relative position relationship is a relative position relationship between the vertex coordinate pair and the second information region.

The predetermined relative region relationship refers to a relative position between the vertex coordinate pair of the first information region and the upper edge, the lower edge, the left edge and the right edge of the second information region.

The terminal may determine the region position of the second information region according to at least two vertex coordinate pair of the first information region and a predetermined relative position relationship.

Alternatively, the first information region includes four vertexes, and specific manners that which two vertex coordinate pair among the four vertexes are used will not be elaborated herein. Alternatively, the lager a distance between two vertex coordinate pair in the first information region, the smaller the error appearing in determining the second information region.

In step 203, the second information region is segmented to obtain at least one character zone.

After determining the region position of the second information region, the second information region is segmented, and at least one character zone is obtained. The character zone in an image zone including singe characters.

To sum up, by obtaining a region position of a first information region in a credential image; determining a second information region according to the region position of the first information region; and segmenting the second information region to obtain at least one character zone, the method provided in the embodiment of the disclosure may solve the problems in the related art that it is difficult to identify the identity card information in the identity card image obtained directly by photographing and that the positioning of the identity card information are inaccurate. By determining the second information region based on the region position of the first information region in the credential image and segmenting the second information region, the positioning of the second information region and the recognition of a character zone in the second information region can be accurately.

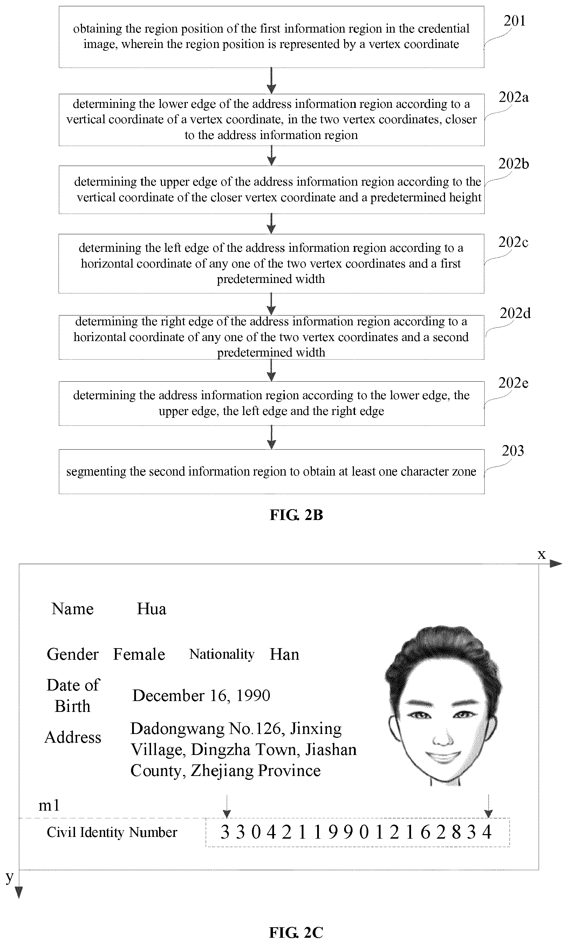

In the embodiment illustrated in Fig. 2A, the first information region is the civil identity number region in the second-generation identity card, wherein at least two vertex coordinate pair are the vertex coordinate pair of the top left vertex and the top right vertex of the civil identity number region; and the second information region is the address information region in the second-generation identity card. The following steps 202a-202e may substitute for step 202, as shown in Fig. 2B.

In step 202a, the lower edge of the address information region is determined according to a vertical coordinate of a vertex coordinate pair which is the one located most closely to the address information region in the two vertex coordinate pair.

It can be seen from a predetermined relative position relationship between the civil identity number region and the address information region, the address information region is right above the civil identity number region. Therefore, according to the establishing manner of Cartesian coordinates, for two vertex coordinate pair, the higher the vertex, the smaller the vertical coordinate, and the higher vertex is closer to the address information region. Thus, a horizontal line in which the vertical coordinate of the higher vertex in the two vertex coordinate pair is located is served as the lower edge of the address information region. As shown in Fig. 2C, the horizontal line in which the vertical coordinate of the first number "3" in the civil identity number region is served as the lower edge m1 of the address information region.

In step 202b, the upper edge of the address information region is determined according to a vertical coordinate of a closest vertex coordinate pair and a predetermined height.

The upper edge is determined by the following actions: upon determining the vertical coordinate of the vertex which is most closely to the address information region, taking the vertical coordinate as an initial position of vertical coordinates, shifting up by the distance of the predetermined height, and then taking the horizontal line at which the vertical coordinate located currently as the upper edge of the address information region.

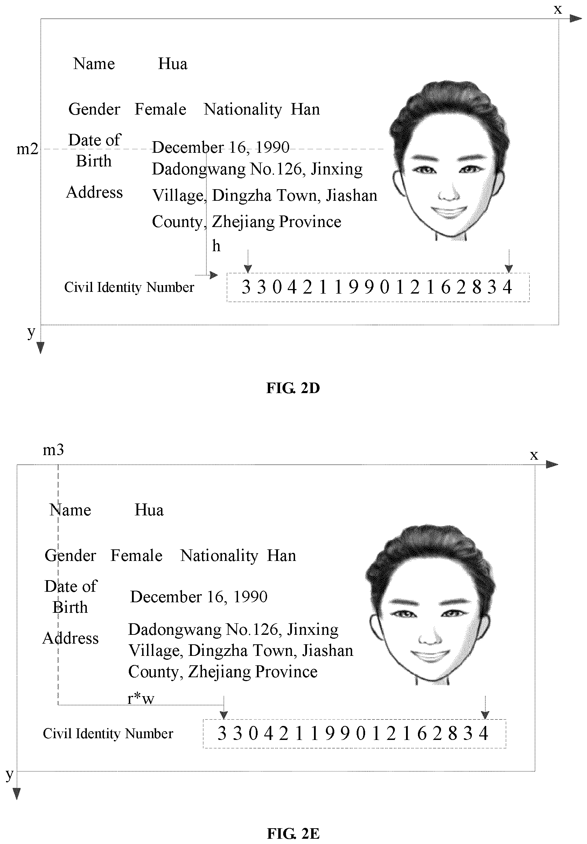

Alternatively, the predetermined height is a relatively broad height, which only requires that a region shifted by the predetermined height covers the address information region. As shown in Fig.2D, the upper edge is determined by taking the first number "3" in the civil identity number region as an initial position of a vertical coordinate, shifting up by height h, and taking the corresponding horizontal line at which the vertical coordinate located currently as upper edge m2 of the address information region.

In step 202c, the left edge of the address information region is determined according to a horizontal coordinate of any one of the two vertex coordinate pair and a first predetermined width.

The left edge is determined by the following actions: shifting left a horizontal coordinate of any one of the two vertex coordinate pair by the first predetermined width, and taking the vertical line at which the horizontal coordinate located currently as the upper edge of the address information region. As shown in Fig. 2E, the left edge is determined by taking the first number "3" in the civil identity number region as an initial position of a horizontal coordinate, shifting left by width r*w, wherein r represents a percentage and w represents the length of the civil identity number region, and taking the vertical line which is corresponding to r*m and at which the horizontal coordinate is located currently as left edge m3 of the address information region.

Alternatively, the first predetermined width varies from a horizontal coordinate of different vertex coordinate pair. That is to say, the first predetermined width is different depend on the used horizontal coordinate of vertex coordinate pair.

Alternatively, the first predetermined width is a percentage of the length of the civil identity number region.

In step 202d, the right edge is determined according to a horizontal coordinate of any one of the two vertex coordinate pairs and a second predetermined width.

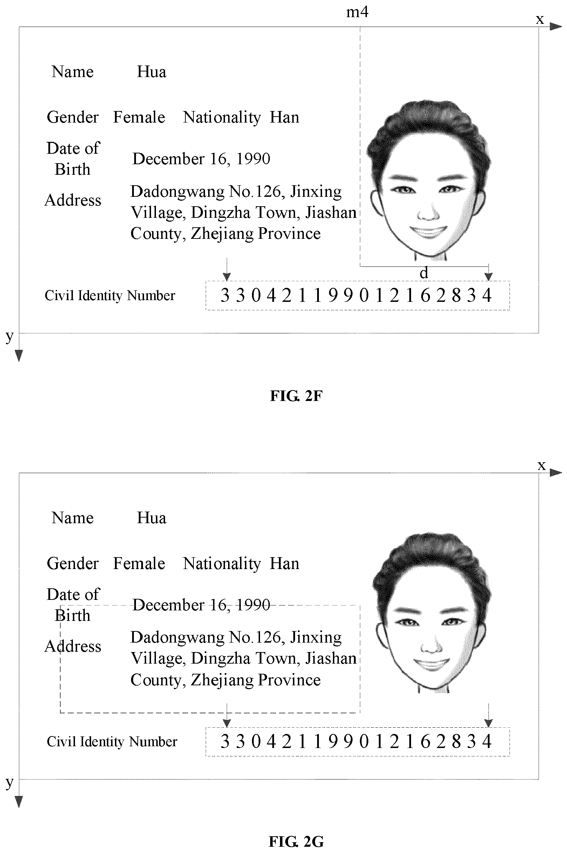

The right edge is determined by the following actions: shifting a horizontal coordinate of any one of the two vertex coordinate pairs by the second predetermined width and taking the vertical line at which the horizontal coordinate of the vertex coordinate pair located currently as the right edge of the address information region. As shown in Fig. 2F, the right edge is determined by taking the last number "4" in the civil identity number region as an initial position of a horizontal coordinate, shifting left by width d, and taking the vertical line which is corresponding to r and at which the horizontal coordinate is located currently as right edge m4 of the address information region.

Alternatively, the second predetermined width varies from a horizontal coordinate of different vertex coordinate pair. That is to say, the first predetermined width is different depend on the used horizontal coordinate of vertex coordinate pair. In addition, while determining the right edge of the address information region, horizontal coordinates of some of vertex coordinate pairs need to be shifted left, horizontal coordinates of other vertex coordinate pairs need to be shifted right, that is to say, a shift direction varies from different vertex coordinate pair, which is defined by the above described relative position relationship.

Alternatively, the second predetermined width is the percentage of the length of the civil identity number region.

In step 202e, the address information region is framed by the lower edge, the upper edge, the left edge and the right edge.

The address information region framed by the lower edge, the upper edge, the left edge and the right edge, which are determined according to steps 202a-202d, is shown in Fig. 2G.

To sum up, by determining the upper edge, the lower edge, the left edge and the right edge of the address information region respectively according to two vertex coordinate pairs in the first information region and the predetermined relative position relationship, the method for region extraction provided in the embodiment of the disclosure can facilitate to position accurately when segmenting characters in the second information region.

It is to be noted that, with respect to the implementation for obtaining the region position of the civil identity number region in the second-generation identity image in the embodiment illustrated in Fig. 2B, since the format of the civil identity number region is relatively fixed and the related technology is mature, the embodiment will not describe in detail. As an exemplary way, by extracting the haar feature or other features in the second-generation identity image, and inputing the obtained feature into Adaboost or SVM (Support Vector Machine) to perform training, a training model is obtained. Using the training model to recognize the civil identity number region in the second-generation identity image to be recognized, the region position of the civil identity number region is determined.

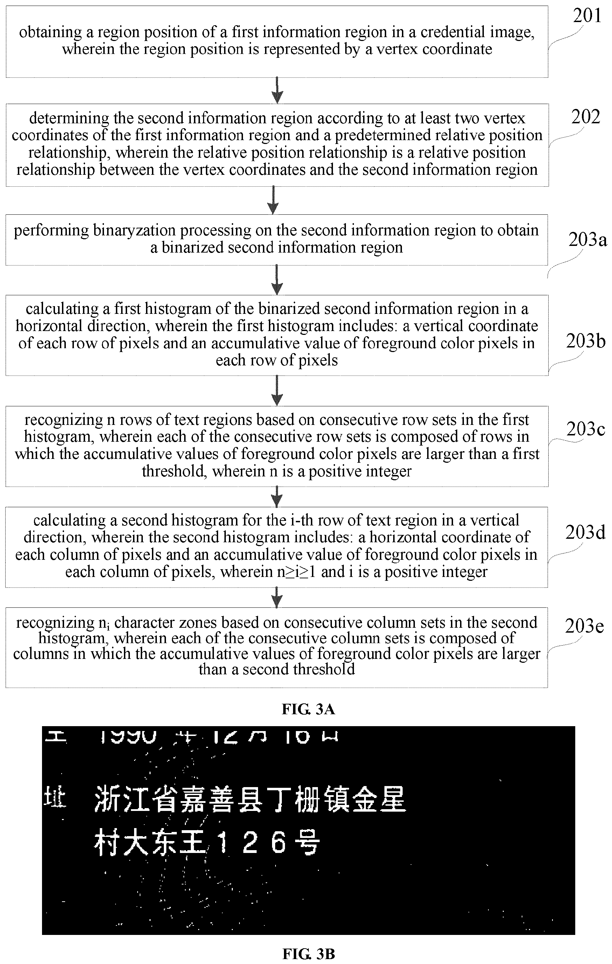

In the embodiment as illustrated in Fig. 2A, the following steps 203a-203e may substitute for step 203, as shown in Fig. 3A.

In step 203a, a binarization processing is performed on the second information region to obtain a binarized second information region.

Alternatively, according to the second information region determined by step 202, a series of preprocessing is performed on the second information region, which may include operations such as denoising, filtering, edge extraction, and so on. Then the binarization processing is performed on the preprocessed second information region.

Binarization refers to the following operations: comparing gray value of pixels in the second information region with a predetermined gray value threshold; dividing the pixels in the second information region into two parts: a group of pixels which are larger than the predetermined gray value threshold, and a group of pixels which are smaller than the predetermined gray value threshold; rendering the two groups of pixels with black and white; and then obtaining the binarized second information region, as shown in Fig. 3B, wherein the text means "Dadongwang No. 126, Jinxing Village, DingZha Town, Jiashan County, Zhejiang Province". Herein, a color pixel that is located in the foreground is referred as foreground color pixel, namely the white pixels in Fig. 3B; a color pixel that is located in the background is referred as background color pixel, namely the black pixels in Fig. 3B.

In step 203b, a first histogram is calculated for the binarized second information region in a horizontal direction, wherein the first histogram includes: a vertical coordinate of each row of pixels and an accumulative value of foreground color pixels in each row of pixels.

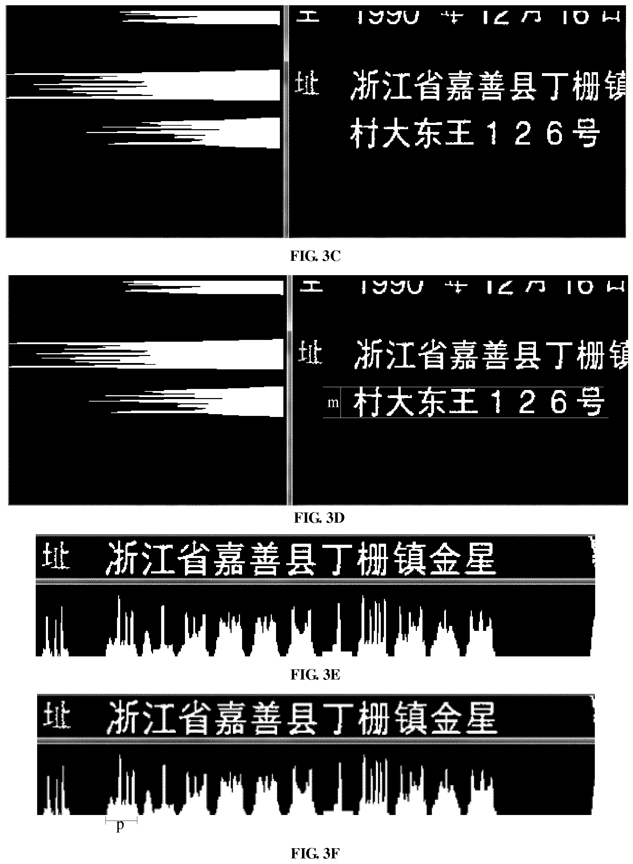

For calculating the first histogram first histogram for the binarized second information region in a horizontal direction, a vertical coordinate of each row of pixels is represented in the vertical direction of the first histogram, and an accumulative value of a number of foreground color pixels in each row of pixels is represented in a horizontal direction of the first histogram, as shown in Fig. 3C, wherein the text means "Dadongwang No.126, DingZha Town, Jiashan County, Zhejiang Province".

In step 203c, n rows of text regions are recognized according to the accumulative value of foreground color pixels is larger than a first threshold, wherein n is a positive integer.

Rows of text regions are determined by the following actions: obtaining an accumulative value of foreground color pixels in each row of pixels according to the first histogram; comparing a accumulative value of foreground color pixels in each row of pixels with the first predetermined threshold, and then determining consecutive row sets in the first histogram as the rows of text regions, wherein each of the consecutive row sets is composed of rows in which the accumulative values of foreground color pixels are larger than a first threshold.

The consecutive row sets refer to a set composed of pixels of consecutive m rows in which the accumulative values of foreground color pixels are larger than a first threshold. As shown in Fig. 3D, for m rows of pixels, accumulative values of foreground color pixels which are on the right of the histogram are larger than the first threshold, and the text region corresponding to the m rows of pixels in the credential image is " 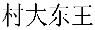 126 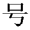 " meaning "Dadongwang No.126", wherein the text in Fig.3D means "Dadongwang No.126, DingZha Town, Jiashan County, Zhejiang Province".

Each consecutive row set is recognized as a row of text region, and n consecutive row sets are recognized as n rows of text regions.

In step 203d, a second histogram is calculated for the i-th row of text region in a vertical direction, wherein the second histogram includes: a horizontal coordinate of each column of pixels and an accumulative value of foreground color pixels in each column of pixels, wherein n≥i≥1 and i is a positive integer.

Upon determining n rows of text regions, the second histogram is calculated for the i-th row of text region in a vertical direction, wherein a horizontal coordinate of each column of pixels is represented in the horizontal direction of the second histogram and an accumulative value of foreground color pixels in each column of pixels is represented in the vertical direction of the second histogram, as shown in Fig.3E, wherein the text means "Jinxing, DingZha Town, Jiashan County, Zhejiang Province".

In step 203e, n; character zones is recognized according to consecutive column sets in the second histogram, wherein each of the consecutive column sets is composed of columns in which the accumulative values of foreground color pixels are larger than a second threshold.

Columns of character zones are determined by the following actions: obtaining a accumulative value of foreground color pixels in each column of pixels according to the second histogram; comparing a accumulative value of foreground color pixels in each column of pixels with the second predetermined threshold, and then determining consecutive column sets in the second histogram as the columns of character zones, wherein each of the consecutive column sets is composed of columns in which the accumulative values of foreground color pixels are larger than the second threshold.

The consecutive column sets refer to a set composed of pixels of consecutive p columns in which the accumulative values of foreground color pixels are larger than the second threshold. As shown in Fig. 3F, wherein the text means "Jinxing, DingZha Town, Jiashan County, Zhejiang Province", for p rows of pixels, accumulative values of foreground color pixels which are on the bottom of the histogram are larger than the second threshold, and the character zone corresponding to the p columns of pixels in the credential image is " 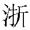 " corresponding to "Zhe".

Each consecutive column set is recognized as a column of character zone, and n consecutive column sets are recognized as p columns of character zones.

To sum up, the method for region extraction provided in the embodiment may include: by performing binarization processing on the second information region, and calculating the first histogram of the binarized second information region in a horizontal direction to recognize n rows of text regions in the second information region; by calculating the second histogram of n rows of text regions in the vertical direction to recognize a character zone corresponding to each character; and by determining rows of text regions firstly, then determining character zones in each row of text region according to rows of text regions to allow a more accurate positioning of the character zones in the second information region more accurate.

In the embodiment illustrated in Fig. 3A, during the process for determining the second information region by the region position of the first information region and the relative position relationship, there may appear errors due to partitioning text or noise which do not belong to the second information region into it. In view of this, referring to the following embodiment, the text or noise which is not belonging to the second information region may be discarded according to row spacing.

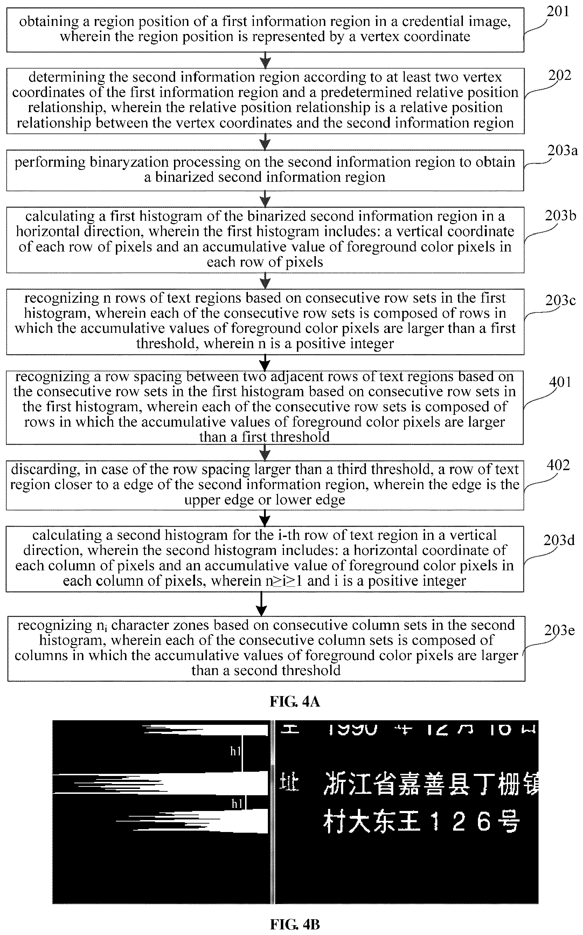

In an embodiment illustrated in Fig. 3A, the following steps may be added behind the step 203, as shown in Fig. 4A.

In step 401, row spacing between two adjacent rows of text regions is recognized based on the consecutive row sets in the first histogram, wherein each of the consecutive row sets is composed of rows in which the accumulative values of foreground color pixels are larger than the first threshold.

It is to be noted that, the address information region generally includes 1-3 rows of text regions, which are with relatively small row spacing to each other. Meanwhile, these rows have relatively large row spacing with other text regions. Text regions which do not belong to the second information region are discarded through characteristics of row spacing in this step.

For n rows of text regions recognized in step 203c, the row spacing between two adjacent rows is obtained. Row spacing refers to a distance between two rows of text regions in the first histogram. As shown in Fig. 4B, the row spacing between one row of text region and another is h1, wherein the text means "Dadongwang No.126, DingZha Town, Jiashan County, Zhejiang Province".

In step 402, when the row spacing is larger than a third threshold, a row of text region, which is closer to either the upper edge or the lower edge of the second information region, is discarded.

According to the first histogram, searching text regions from bottom to top, upon the first time finding a row spacing between two adjacent rows of text regions is larger than the third threshold, the lower row of text region is discarded. Then continuing the search upwards, when finding a row spacing between two adjacent rows of text regions is larger than the third threshold again, the search is terminated, and the upper row of text region is discarded, meanwhile determining that the rest text regions belong to the second information region.

Upon the first time finding a row spacing between two adjacent rows of text regions is smaller than the third threshold, the two rows of text regions are determined to belong to the second information region. Then continuing the search upwards until a row spacing between two adjacent rows of text regions is larger than the third threshold has been found, the upper row of text region is discarded and the search is terminated. Alternatively, continuing the search upwards until there is no row spacing between two adjacent rows of text regions is larger than the third threshold, the search is terminated.

Alternatively, according to the first histogram, searching text regions from top to bottom, upon the first time finding a row spacing between two adjacent rows of text regions is larger than the third threshold, the higher row of text region is discarded. Then continuing the search upwards, when finding a row spacing between two adjacent rows of text regions is larger than the third threshold again, the search is terminated, and the lower row of text region is discarded, meanwhile determining that the rest text regions belong to the second information region.

When the first time finding a row spacing between two adjacent rows of text regions is smaller than the third threshold, the two rows of text regions are determined to belong to the second information region. Then continuing the search downwards until a row spacing between two adjacent rows of text regions is larger than the third threshold has been found, the lower row of text region is discarded and the search is terminated. Alternatively, continuing the search downwards until there is no row spacing between two adjacent rows of text regions is larger than the third threshold, the search is terminated.

To sum up, the method for region extraction provided in the embodiment may include: recognizing a row spacing between two adjacent rows of text regions based on consecutive row sets in the first histogram, wherein each of the consecutive row sets is composed of rows in which the accumulative values of foreground color pixels are larger than a first threshold; discarding, in case of the row spacing larger than a third threshold, a row of text region closer to a edge of the second information region, wherein the edge is the upper edge or lower edge; determining text regions in the second information region according to magnitude of row spacing, thus allowing a more accurate positioning of the second information region.

In the embodiment illustrated in Fig. 3A, during the process for determining the left and right edge of the second information region, there may appear errors due to partitioning character zones which do not belong to the second information region into it. In view of this, referring to the following embodiment, character zones which do not belong to the second information region may be discarded according to character spacing.

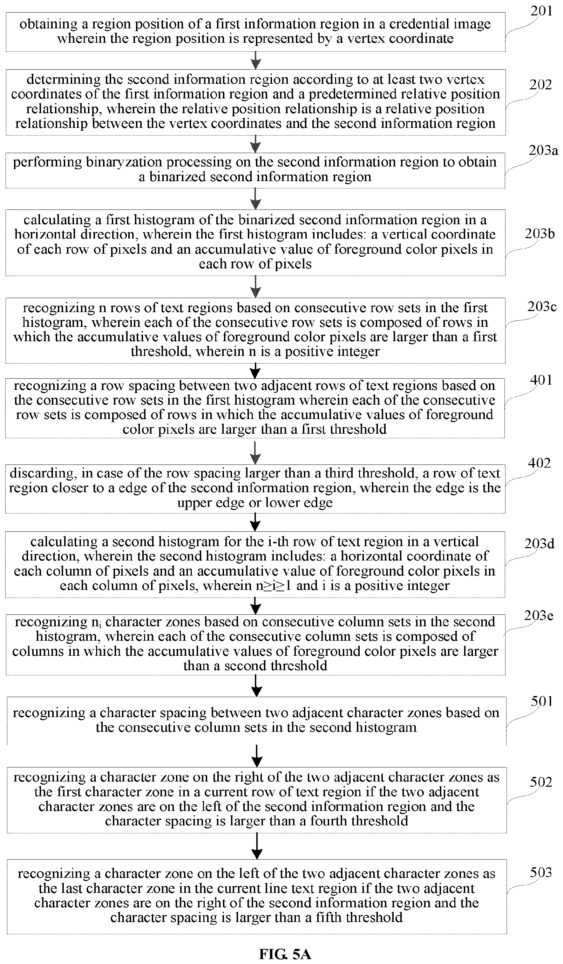

In the embodiment illustrated in Fig. 4A, the following steps may be added behind the step 203e, as shown in Fig. 5A.

In step 501, character spacing between two adjacent columns of text regions is recognized based on consecutive column sets in the second histogram, wherein each of the consecutive column sets is composed of columns in which the accumulative values of foreground color pixels are larger than a second threshold.

For n; character zones recognized in step 203e, the character spacing between two adjacent columns is obtained. The column spacing between two adjacent two columns in each row of text region is relatively small.

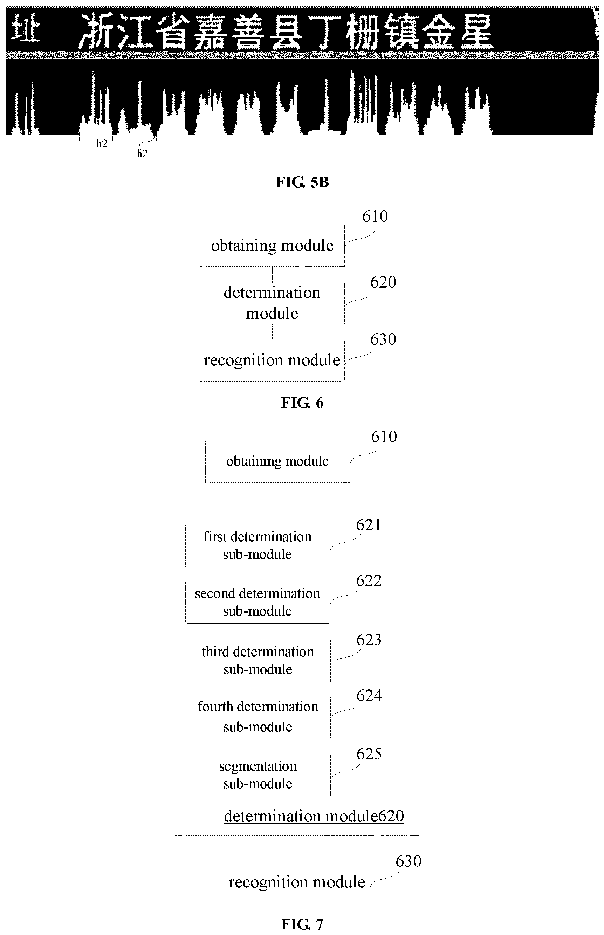

Character spacing refers to a distance between two character zones in the second histogram. As shown in Fig. 5B, the character spacing between characters is h2, wherein the text means "Jinxing, DingZha Town, Jiashan County, Zhejiang Province".

In step 502, if the two adjacent character zones are on the left of the second information region and the character spacing is larger than a fourth threshold, a character zone on the right of the two adjacent character zones is recognized as the first character zone in a current row of text region.

Taking a character in the middle of the current row of text region as an initial position, starting to search leftward from the initial position, when the first time finding a character spacing between two adjacent character zones is larger than the fourth threshold, character zones on the left of the two adjacent character zones (all of the character zones on the left of the character spacing) are discarded, and the character zone on the right of the two adjacent character zones is determined as the first character zone of the current row of text region. Upon recognizing the first character zone, starting to search rightward based on the position of the first character zone until finding a character spacing between two adjacent character zones is larger than the fourth threshold, the search is terminated.

When first time to find a character spacing between two adjacent character zones is smaller than the fourth threshold, the two adjacent character zones are determined to belong to the current row of text region.

In step 503, if the two adjacent character zones are on the right of the second information region and the character spacing is larger than a fifth threshold, the character zone on the left of the two adjacent character zones is determined as the last character zone in the current line text region.

Taking a character in the middle of the current row of text region as an initial position, starting to search rightward from the initial position, when first time to find a character spacing between two adjacent character zones is larger than the fifth threshold, character zones on the right of the two adjacent character zones (all of the character zones on the right of the character spacing) are discarded, and the character zone on the left of the two adjacent character zones is determined as the last character zone of the current row of text region. Upon recognizing the last character zone, starting to search leftward based on the position of the last character zone until finding a character spacing between two adjacent character zones is larger than the fifth threshold, the search is terminated

When first time to find a character spacing between two adjacent character zones is smaller than the fifth threshold, the two adjacent character zones are determined to belong to the current row of text region.

To sum up, the method for region extraction provided in the embodiment may include: recognizing a character spacing between two adjacent character zones based on consecutive column sets in the second histogram, wherein each of the consecutive column sets is composed of columns in which the accumulative values of foreground color pixels are larger than a second threshold; recognizing the character zone on the right of the two adjacent character zones as the first character zone in a current row of text region if the two adjacent character zones are on the left of the second information region and the character spacing is larger than a fourth threshold; recognizing the character zone on the left of the two adjacent character zones as the last character zone in the current line text region if the two adjacent character zones are on the right of the second information region and the character spacing is larger than a fifth threshold; determining character zones in the second information region according to magnitude of character spacing, and thus allowing a more accurate positioning of each character zone in the second information region.

It should be noted that in the embodiment illustrated in Fig. 1, the embodiment illustrated in Fig. 2A, the embodiment illustrated in Fig. 2B, the embodiment illustrated in Fig. 3A, the embodiment illustrated in Fig. 4A and the embodiment illustrated in Fig. 5A, upon the recognition of character zones, characters of the character zones may be recognized by performing further processing, according to existing character recognition algorithms, on the character zones.

It should be further noted that, the identity card image shown in the above-mentioned embodiments is only an exemplary illustration, which is not a real identity card image.

Device embodiments are shown below, which may be configured to perform method embodiments of the disclosure. For the details not cited in the device embodiments, please see the method embodiments of the disclosure.

Fig. 6 is a block diagram illustrating a device for region extraction according to an exemplary embodiment. As shown in Fig. 6, the device for region extraction includes but not limited to the followings.

An obtaining module 610 is configured to obtain a region position of a first information region in a credential image.

The credential image may be an image obtained directly by photographing the credential, such as an image of an identity card, an image of a social security card and the like.

The first information region refers to the region carrying text information, for example at least one of name information region, data of birth region, gender region, address information region, civil identity number information region, number information region, authority of issue , date of expiry region and the like.

A determination module 620 is configured to determine a second information region according to the region position of the first information region.

A recognition module is configured to segment the second information region to obtain at least one character zone.

To sum up, according to the device for region extraction provided in the embodiment of the disclosure, by obtaining the region position of the first information region in the credential image; determine the second information region according to the region position of the first information region; segmenting the second information region to obtain at least one character zone, the problems in related art that it is difficult to recognize some information region in the credential image obtained directly by photographing and that the positioning of some information region are inaccurate can be solved, and the effect of positioning the information region accurately can be reached by determining the second information region based on the region position of the first information region and segmenting the second information region.

Fig. 7 is a block diagram illustrating a device for region extraction according to another exemplary embodiment. As shown in Fig. 7, the device for region extraction includes but not limited to the followings.

An obtaining module 610 is configured to obtain a region position of a first information region in a credential image.

The credential image may be an image obtained directly by photographing the credential, such as an image of an identity card, an image of a social security card and the like.

During obtaining the region position of the first information region, the obtaining module 610 obtains vertex coordinate pairs of respective vertexes in the first information region based on the region position of the first information region. Alternatively, the region position is represented by vertex coordinate pairs.

For example, taking the top left corner of the credential image as the origin, the upper edge as the positive axis of the horizontal coordinate x, the left edge as the positive axis of the vertical coordinate y to establish a Cartesian coordinates, according to positions of respective vertexes in the Cartesian coordinates, vertex coordinate pairs corresponding to respective vertexes may be obtained, and the region position of the first information region is represented by vertex coordinate pairs.

A determination module 620 is configured to determine a second information region according to the region position of the first information region.

A recognition module 620 is further configured to determine the second information region according to at least two vertex coordinate pairs of the first information region and a predetermined relative position relationship, wherein the relative position relationship is a relative position relationship between vertex coordinate pairs and the second information region.

The predetermined relative region relationship refers to a relative position between the vertex coordinate pair of the first information region and the upper edge, the lower edge, the left edge and the right edge of the second information region.

The determination module 620 may determine the region position of the second information region according to at least two vertex coordinate pair of the first information region and a predetermined relative position relationship.

In the embodiment, the determination module 620 may include the following sub-modules.

A first determination sub-module 621 is configured to determine a lower edge of the address information region according to a vertical coordinate of a vertex coordinate, in the two vertex coordinates, closer to the address information region.

It can be seen from a predetermined relative position relationship between the civil identity number region and the address information region, the address information region is right above the civil identity number region. Therefore, according to the establishing manner of Cartesian coordinates, for two vertex coordinate pairs, the higher the vertex, the smaller the vertical coordinate, and thus the higher vertex is closer to the address information region. Therefore, the first determination sub-module 621 takes a horizontal line in which the vertical coordinate of the higher vertex in the two vertex coordinate pairs is located as the lower edge of the address information region.

A second determination sub-module 622 is configured to determine a upper edge of the address information region according to the vertical coordinate of the closer vertex coordinate and a predetermined height.

upon determining the vertical coordinate of the vertex which is most closely to the address information region by the first determination sub-module 621, the second determination sub-module 622 takes the vertical coordinate as an initial position of vertical coordinates, shift up the position of vertical coordinates by the distance of the predetermined height, and then takes the horizontal line at which the vertical coordinate located currently as the upper edge of the address information region.

A third determination sub-module 623 is configured to determine a left edge of the address information region according to a horizontal coordinate of any one of the two vertex coordinates and a first predetermined width.

The third determination sub-module 623 shifts left a horizontal coordinate of any one of the two vertex coordinate pairs by the first predetermined width, and takes the vertical line at which the horizontal coordinate located currently as the left edge of the address information region.

A fourth determination sub-module 624 is configured to determine a right edge of the address information region according to a horizontal coordinate of any one of the two vertex coordinates and a second predetermined width.

The fourth determination sub-module 624 shifts left a horizontal coordinate of any one of the two vertex coordinate pairs by the second predetermined width, and takes the vertical line at which the horizontal coordinate located currently as the right edge of the address information region

A segmentation sub-module 625 is configured to determine the address information region according to the lower edge, the upper edge, the left edge and the right edge.

The segmentation sub-module 625 segments the address information region according to the upper, lower, left and right edges of the address information region determined in steps the first determination sub-module 621 to the four determination sub-module 624.

A recognition module 630 is configured to segment the second information region to obtain at least one character zone.

Upon determining the region position of the second information region by the segmentation sub-module 625, the recognition module 630 may segment the second information region. After segmenting, the second information region includes at least one character zone, wherein the character zone is an image zone including singe character.

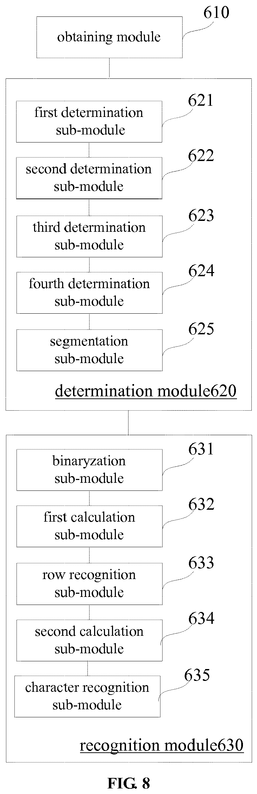

In an embodiment illustrated in Fig. 7, the recognition module 630 may include the following sub-modules, as shown in Fig. 8.

A binarization sub-module 631 is configured to perform binarization processing on the second information region to obtain a binarized second information region.

Alternatively, according to the second information region determined by the recognition module 630, a series of preprocessing is performed on the second information region, which may include operations such as denoising, filtering, edge extraction, and so on. Then the binarization processing is performed on the preprocessed second information region.

Binarization refers to the following operations: comparing gray value of pixels in the second information region with a predetermined gray value threshold; dividing the pixels in the second information region into two parts: a group of pixels which are larger than the predetermined gray value threshold, and a group of pixels which are smaller than the predetermined gray value threshold; rendering the two groups of pixels with black and white; and then obtaining the binarized second information region.

A first calculation sub-module 632 is configured to calculate a first histogram of the binarized second information region in a horizontal direction, wherein the first histogram includes: a vertical coordinate of each row of pixels and an accumulative value of foreground color pixels in each row of pixels.

The first calculation sub-module 632 calculates the first histogram for the binarized second information region obtained from the binarization sub-module 631 in a horizontal direction, a vertical coordinate of each row of pixels is represented in the vertical direction of the first histogram, and an accumulative value of a number of foreground color pixels in each row of pixels is represented in a horizontal direction of the first histogram.

A row recognition sub-module 633 is configured to recognize n rows of text regions based on consecutive row sets in the first histogram, wherein each of the consecutive row sets is composed of rows in which the accumulative values of foreground color pixels are larger than a first threshold, wherein n is a positive integer.

The accumulative value of foreground color pixels in each row of pixels is obtained according to the first histogram. The row recognition sub-module 633 compares a accumulative value of foreground color pixels in each row of pixels with the first predetermined threshold, and then determines consecutive row sets in the first histogram as the rows of text regions, wherein each of the consecutive row sets is composed of rows in which the accumulative values of foreground color pixels are larger than a first threshold.

The consecutive row sets refer to a set composed of pixels of consecutive m rows in which the accumulative values of foreground color pixels are larger than a first threshold.

Each consecutive row set is recognized as a row of text region, and n consecutive row sets are recognized as n rows of text regions.

A second calculation sub-module 634 is configured to calculate a second histogram for the i-th row of text region in a vertical direction, wherein the second histogram includes: a horizontal coordinate of each column of pixels and an accumulative value of foreground color pixels in each column of pixels, wherein n≥i≥1 and i is a positive integer.

Upon determining n rows of text regions by the row recognition sub-module 633, the second calculation sub-module 634 calculates the second histogram in a vertical direction, wherein a horizontal coordinate of each column of pixels is represented in the horizontal direction of the second histogram and an accumulative value of foreground color pixels in each column of pixels is represented in the vertical direction of the second histogram.

A character recognition sub-module 635 is configured to recognize n; character zones based on consecutive column sets in the second histogram, wherein each of the consecutive column sets is composed of columns in which the accumulative values of foreground color pixels are larger than a second threshold.

the accumulative value of foreground color pixels in each column of pixels is obtained according to the second histogram. The character recognition sub-module 635 compares the accumulative value of foreground color pixels in each column of pixels with the second predetermined threshold, and then determines consecutive column sets in the second histogram as the columns of character zones, wherein each of the consecutive column sets is composed of columns in which the accumulative values of foreground color pixels are larger than the second threshold.

The consecutive column sets refer to a set composed of pixels of consecutive p columns in which the accumulative values of foreground color pixels are larger than the second threshold.

Each consecutive column set is recognized as a column of character zone, and n consecutive column sets are recognized as p columns of character zones.

To sum up, the device for region extraction provided in the embodiment may be configured to: perform binarization processing on the second information region, and calculate the first histogram of the binarized second information region in a horizontal direction to recognize n rows of text regions in the second information region. By calculating the second histogram of n rows of text regions in the vertical direction to recognize a character zone corresponding to each character; and by determining rows of text regions firstly, then determining character zones in each row of text region according to rows of text regions, the positioning of the character zones in the second information region can be more accurate.

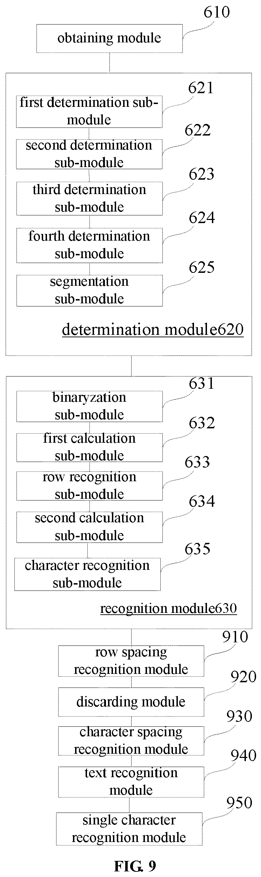

In an embodiment illustrated in Fig. 8, the device for region extraction may include the following modules, as shown in Fig. 9.

A row spacing recognition module 910 is configured to recognize a row spacing between two adjacent rows of text regions based on the consecutive row sets in the first histogram.

For n rows of text regions recognized by the row recognition sub-module 633, the row spacing recognition module 910 obtains the row spacing between two adjacent rows. Row spacing refers to a distance between two rows of text regions in the first histogram.

A discarding module 920 is configured to discard, in case of the row spacing larger than a third threshold, a row of text region closer to a edge of the second information region, wherein the edge is the upper edge or lower edge.

According to the first histogram, searching text regions from bottom to top, upon the first time to find a row spacing between two adjacent rows of text regions is larger than the third threshold, the discarding module 920 discards the lower row of text region. Then continuing the search upwards, when finding a row spacing between two adjacent rows of text regions is larger than the third threshold again, the search is terminated, and the discarding module 920 discards the upper row of text region, meanwhile determining that the rest text regions belong to the second information region.

A character spacing recognition module 930 is configured to recognize a character spacing between two adjacent character zones based on the consecutive column sets in the second histogram.

With respect to n; character zones recognized by the character recognition sub-module 635, the character spacing recognition module 930 obtains the character spacing between two adjacent columns. The column spacing between two adjacent two columns in each row of text region is relatively small.

Character spacing refers to a distance between two character zones in the second histogram.

A text recognition module 940 is configured to recognize a character zone on the right of the two adjacent character zones as the first character zone in a current row of text region if the two adjacent character zones are on the left of the second information region and the character spacing is larger than a fourth threshold.

A single character recognition module 950 is configured to recognize a character zone on the left of the two adjacent character zones as the last character zone in a current row of text region if the two adjacent character zones are on the right of the second information region and the character spacing is larger than a fifth threshold.

To sum up, the device for region extraction provided in the embodiment may be configured to recognize a character spacing between two adjacent character zones based on consecutive column sets in the second histogram, wherein each of the consecutive column sets is composed of columns in which the accumulative values of foreground color pixels are larger than a second threshold; recognize the character zone on the right of the two adjacent character zones as the first character zone in a current row of text region if the two adjacent character zones are on the left of the second information region and the character spacing is larger than a fourth threshold; recognize the character zone on the left of the two adjacent character zones as the last character zone in the current line text region if the two adjacent character zones are on the right of the second information region and the character spacing is larger than a fifth threshold; by determining character zones in the second information region according to magnitude of character spacing, it can reach an accurate positioning of each character zone in the second information region.

With respect to the device in the above embodiment, the specific manners that the respective modules perform operations have been described in detail in the embodiments regarding the relevant methods, and will not be elaborated herein.

In an exemplary embodiment of the disclosure, a device for region extraction is provided, which may implement the method for region extraction in the disclosure, the device including: a processor, a memory for storing processor-executable instructions; wherein the processor is configured to: obtain a region position of a first information region in a credential image; determine a second information region according to the region position of the first information region; and segment the second information region to obtain at least one character zone.

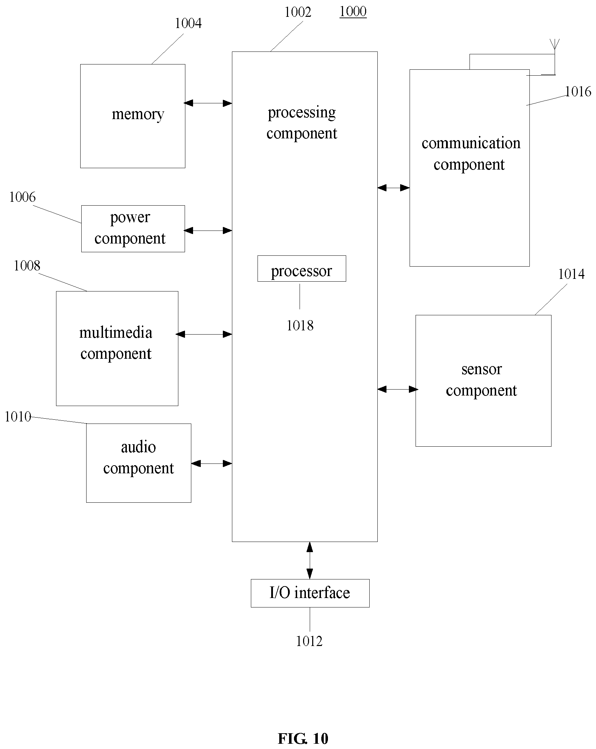

FIG. 10 is a block diagram of a device 1000 for region extraction according to an exemplary embodiment. For example, the device 000 may be a mobile phone, a computer, a digital broadcast terminal, a messaging device, a gaming console, a tablet, a medical device, exercise equipment, a personal digital assistant, and the like.

Referring to FIG. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1018 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power for the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the device 1000 is in an operation mode, such as a photographing mode or a video mode. Each of the front camera and the rear camera may be a fixed optical lens system or have optical focusing and zooming capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, the peripheral interface modules being, for example, a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components (e.g., the display and the keypad, of the device 1000), a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of a nearby object without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In an exemplary embodiment, the communication component 1016 receives a broadcast signal or broadcast associated information from an external broadcast management system via a broadcast channel. In an exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for features retrieving.

In exemplary embodiments, there is also provided a non-transitory computer-readable storage medium including instructions, such as included in the memory 1004, executable by the processor 1018 in the device 1000, for performing the above-described methods for features retrieving. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.
It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A computer implemented method for region extraction, comprising:
obtaining (101) a region position of a first information region in a credential image, wherein the first information region is a region having text information;
determining (102) a second information region according to the region position of the first information region;
segmenting (103) the second information region to obtain at least one character zone,
wherein the segmenting (103) the second information region to obtain at least one character zone comprises:
performing (203a) binarization processing on the second information region to obtain a binarized second information region;
calculating (203b) a first histogram of the second information region in a horizontal direction, wherein the first histogram includes: a vertical coordinate of each row of pixels and an accumulative value of foreground color pixels in each row of pixels;
recognizing (203c) n rows of text regions based on consecutive row sets in the first histogram, wherein each of the consecutive row sets is composed of rows in which the accumulative values of foreground color pixels are larger than a first threshold, wherein n is a positive integer;
recognizing (401) a row spacing between two adjacent rows of text regions based on the consecutive row sets in the first histogram;
discarding (402) a row of text region closer to either an upper edge or a lower edge of the second information region in the case of the row spacing being larger than a third threshold,
**characterized in that**
segmenting (103) the second information region to obtain at least one character zone further comprises:
calculating (203d) a second histogram for an i-th row of text region in a vertical direction, wherein the second histogram includes: a horizontal coordinate of each column of pixels and an accumulative value of foreground color pixels in each column of pixels, wherein n≥i≥1 and i is a positive integer;
recognizing (203e) nᵢ character zones based on consecutive column sets in the second histogram, wherein each of the consecutive column sets is composed of columns in which the accumulative values of foreground color pixels are larger than a second threshold;
recognizing (501) a character spacing between two adjacent character zones based on the consecutive column sets in the second histogram;
recognizing (502) a character zone on the right of the two adjacent character zones as the first character zone in a current row of text region if the two adjacent character zones are on the left of the second information region and the character spacing between the adjacent character zones is larger than a fourth threshold; and
recognizing (503) a character zone on the left of the two adjacent character zones as the last character zone in the current row of text region if the two adjacent character zones are on the right of the second information region and the character spacing between the adjacent character zones is larger than a fifth threshold.

2. The method of any preceding claim, wherein the region position is represented by a vertex coordinate,
wherein the determining (102) a second information region according to the region position of the first information region comprises:
determining (202) the second information region according to at least two vertex coordinates of the first information region and a predetermined relative position relationship, wherein the relative position relationship is a relative position relationship between the vertex coordinates and the second information region.

3. The method of claim 2, wherein the first information region is a civil identity number region in a second-generation identity (ID) card, the at least two vertex coordinates are two vertex coordinates of the civil identity number region, and the second information region is an address information region in the second-generation identity card,
wherein determining (202) the second information region according to at least two vertex coordinates of the first information region and a predetermined relative position relationship comprises:
determining (202a) a lower edge of the address information region according to a vertical coordinate of a vertex coordinate, in the two vertex coordinates, closer to the address information region;
determining (202b) a upper edge of the address information region according to the vertical coordinate of the closer vertex coordinate and a predetermined height;
determining (202c) a left edge of the address information region according to a horizontal coordinate of any one of the two vertex coordinates and a first predetermined width;
determining (202d) a right edge of the address information region according to a horizontal coordinate of any one of the two vertex coordinates and a second predetermined width; and
determining (202e) the address information region according to the lower edge, the upper edge, the left edge and the right edge.

4. A device for region extraction, comprising:
an obtaining module (610), configured to obtain a region position of a first information region in a credential image, wherein the first information region is a region having text information;
a determination module (620), configured to determine a second information region according to the region position of the first information region; and
a recognition module (630), configured to segment the second information region to obtain at least one character zone,
the recognition module (630) comprising:
a binarization sub-module (631), configured to perform binarization processing on the second information region to obtain a binarized second information region, prior to the step of calculating the first and/or second histograms;
a first calculation sub-module (632), configured to calculate a first histogram of the second information region in a horizontal direction, wherein the first histogram includes: a vertical coordinate of each row of pixels and an accumulative value of foreground color pixels in each row of pixels;
a row recognition sub-module (633), configured to recognize n rows of text regions based on consecutive row sets in the first histogram, wherein each of the consecutive row sets is composed of rows in which the accumulative values of foreground color pixels are larger than a first threshold, wherein n is a positive integer;
a row spacing recognition module (910), configured to recognize a row spacing between two adjacent rows of text regions based on the consecutive row sets in the first histogram;
a discarding module (920), configured to discard a row of text region closer to either an upper edge or a lower edge of the second information region in the case of the row spacing being larger than a third threshold, **characterized in that** the recognition module (630) further comprising:
a second calculation sub-module (634), configured to calculate a second histogram for an i-th row of text region in a vertical direction, wherein the second histogram includes: a horizontal coordinate of each column of pixels and an accumulative value of foreground color pixels in each column of pixels, wherein n≥i ≥1 and i is a positive integer;
a character recognition sub-module (635), configured to recognize nᵢ character zones based on consecutive column sets in the second histogram, wherein each of the consecutive column sets is composed of columns in which the accumulative values of foreground color pixels are larger than a second threshold;
a character spacing recognition module (930), configured to recognize a character spacing between two adjacent character zones based on the consecutive column sets in the second histogram;
a text recognition module (940), configured to recognize a character zone on the right of the two adjacent character zones as the first character zone in a current row of text region if the two adjacent character zones are on the left of the second information region and the character spacing between the adjacent character zones is larger than a fourth threshold; and
a single character recognition module (950), configured to recognize a character zone on the left of the two adjacent character zones as the last character zone in the current row of text region if the two adjacent character zones are on the right of the second information region and the character spacing between the adjacent character zones is larger than a fifth threshold.

5. The device of claim 4, wherein the region position is represented by a vertex coordinate,
wherein the determination module (620) is configured to determine the second information region according to at least two vertex coordinates of the first information region and a predetermined relative position relationship, wherein the relative position relationship is a relative position relationship between the vertex coordinates and the second information region.

6. The device of claim 5, wherein the first information region is a civil identity number region in a second-generation identity (ID) card, the at least two vertex coordinates are two vertex coordinates of the civil identity number region, and the second information region is an address information region in the second-generation identity card,
wherein the determination module (620) comprises:
a first determination sub-module (621), configured to determine a lower edge of the address information region according to a vertical coordinate of a vertex coordinate, in the two vertex coordinates, closer to the address information region;
a second determination sub-module (622), configured to determine a upper edge of the address information region according to the vertical coordinate of the closer vertex coordinate and a predetermined height;
a third determination sub-module (623), configured to determine a left edge of the address information region according to a horizontal coordinate of any one of the two vertex coordinates and a first predetermined width;
a fourth determination sub-module (624), configured to determine a right edge of the address information region according to a horizontal coordinate of any one of the two vertex coordinates and a second predetermined width; and
a segmentation sub-module (625), configured to determine the address information region according to the lower edge, the upper edge, the left edge and the right edge.

7. A non-transitory computer-readable storage medium having stored therein instructions that, when executed by a processor, causes the processor to perform the method of any of claims 1 to 4.

## Patentansprüche

1. Computerimplementiertes Verfahren zur Bereichsextraktion, umfassend:
Erhalten (101) einer Bereichsposition eines ersten Informationsbereichs in einem Ausweisbild, wobei der erste Informationsbereich ein Bereich mit Textinformationen ist;
Bestimmen (102) eines zweiten Informationsbereichs gemäß der Bereichsposition des ersten Informationsbereichs;
Segmentieren (103) des zweiten Informationsbereichs zum Erhalten wenigstens einer Zeichenzone,
wobei das Segmentieren (103) des zweiten Informationsbereichs zum Erhalten wenigstens einer Zeichenzone Folgendes umfasst:
Durchführen (203a) einer Binarisierungsverarbeitung am zweiten Informationsbereich zum Erhalten eines binarisierten zweiten Informationsbereichs;
Berechnen (203b) eines ersten Histogramms des zweiten Informationsbereichs in einer horizontalen Richtung, wobei das erste Histogramm Folgendes aufweist: eine vertikale Koordinate jeder Pixelzeile und einen Summenwert von Vordergrundfarbpixeln in jeder Pixelzeile;
Erkennen (203c) von n Zeilen von Textbereichen auf Basis von Sätzen aufeinanderfolgender Zeilen im ersten Histogramm, wobei die Sätze aufeinanderfolgender Zeilen jeweils aus Zeilen zusammengesetzt sind, in denen die Summenwerte von Vordergrundfarbpixeln größer als ein erster Schwellenwert sind, wobei n eine positive Ganzzahl ist;
Erkennen (401) eines Zeilenabstands zwischen zwei benachbarten Zeilen von Textbereichen auf Basis der Sätze aufeinanderfolgender Zeilen im ersten Histogramm;
Verwerfen (402) einer Textbereichszeile, die näher an einem oberen Rand oder an einem unteren Rand des zweiten Informationsbereichs ist, falls der Zeilenabstand größer als ein dritter Schwellenwert ist,
**dadurch gekennzeichnet, dass**
Segmentieren (103) des zweiten Informationsbereichs zum Erhalten von wenigstens einer Zeichenzone ferner Folgendes umfasst:
Berechnen (203d) eines zweiten Histogramms für eine i-te Textbereichszeile in einer vertikalen Richtung, wobei das zweite Histogramm Folgendes aufweist: eine horizontale Koordinate jeder Pixelspalte und einen Summenwert von Vordergrundfarbpixeln in jeder Pixelspalte, wobei n≥i≥1 ist und i eine positive Ganzzahl ist;
Erkennen (203e) von nᵢ Zeichenzonen auf Basis von Sätzen aufeinanderfolgender Spalten im zweiten Histogramm, wobei die Sätze aufeinanderfolgender Spalten jeweils aus Spalten zusammengesetzt sind, in denen die Summenwerte von Vordergrundfarbpixeln größer als ein zweiter Schwellenwert sind;
Erkennen (501) eines Zeilenabstands zwischen zwei benachbarten Zeichenzonen auf Basis der Sätze aufeinanderfolgender Spalten im zweiten Histogramm;
Erkennen (502) einer Zeichenzone rechts von den zwei benachbarten Zeichenzonen als die erste Zeichenzone in einer aktuellen Textbereichszeile, falls die zwei benachbarten Zeichenzonen links von dem zweiten Informationsbereich sind und der Zeilenabstand zwischen den benachbarten Zeichenzonen größer als ein vierter Schwellenwert ist; und
Erkennen (503) einer Zeichenzone links von den zwei benachbarten Zeichenzonen als die letzte Zeichenzone in der aktuellen Textbereichszeile, falls die zwei benachbarten Zeichenzonen rechts von dem zweiten Informationsbereich sind und der Zeichenabstand zwischen den benachbarten Zeichenzonen größer als ein fünfter Schwellenwert ist.

2. Verfahren nach einem der vorhergehenden Ansprüche, wobei die Bereichsposition durch eine Vertexkoordinate repräsentiert wird,
wobei das Bestimmen (102) eines zweiten Informationsbereichs gemäß der Bereichsposition des ersten Informationsbereichs Folgendes umfasst:
Bestimmen (202) des zweiten Informationsbereichs gemäß wenigstens zwei Vertexkoordinaten des ersten Informationsbereichs und einer vorbestimmten relativen Positionsbeziehung, wobei die relative Positionsbeziehung eine relative Positionsbeziehung zwischen den Vertexkoordinaten und dem zweiten Informationsbereich ist.

3. Verfahren nach Anspruch 2, wobei der erste Informationsbereich ein Personalausweisnummernbereich auf einer Ausweis- (ID) -karte der zweiten Generation ist, die wenigstens zwei Vertexkoordinaten zwei Vertexkoordinaten des Personalausweisnummernbereichs sind und der zweite Informationsbereich ein Adressinformationsbereich auf der Ausweiskarte der zweiten Generation ist,
wobei das Bestimmen (202) des zweiten Informationsbereichs gemäß wenigstens zwei Vertexkoordinaten des ersten Informationsbereichs und einer vorbestimmten relativen Positionsbeziehung Folgendes umfasst:
Bestimmen (202a) eines unteren Rands des Adressinformationsbereichs gemäß einer vertikalen Koordinate einer Vertexkoordinate in den zwei Vertexkoordinaten, die näher am Adressinformationsbereich ist;
Bestimmen (202b) eines oberen Rands des Adressinformationsbereichs gemäß der vertikalen Koordinate der näheren Vertexkoordinate und einer vorbestimmten Höhe;
Bestimmen (202c) eines linken Rands des Adressinformationsbereichs gemäß einer horizontalen Koordinate von einer der zwei Vertexkoordinaten und einer ersten vorbestimmten Breite;
Bestimmen (202d) eines rechten Rands des Adressinformationsbereichs gemäß einer horizontalen Koordinate von einer der zwei Vertexkoordinaten und einer zweiten vorbestimmten Breite; und
Bestimmen (202e) des Adressinformationsbereichs gemäß dem unteren Rand, dem oberen Rand, dem linken Rand und dem rechten Rand.

4. Vorrichtung zur Bereichsextraktion, umfassend:
ein Erhaltmodul (610), das konfiguriert ist zum Erhalten einer Bereichsposition eines ersten Informationsbereichs in einem Ausweisbild, wobei der erste Informationsbereich ein Bereich mit Textinformationen ist;
ein Bestimmungsmodul (620), das konfiguriert ist zum Bestimmen eines zweiten Informationsbereichs gemäß der Bereichsposition des ersten Informationsbereichs; und
ein Erkennungsmodul (630), das konfiguriert ist zum Segmentieren (103) des zweiten Informationsbereichs zum Erhalten wenigstens einer Zeichenzone,
wobei das Erkennungsmodul (630) Folgendes umfasst:
ein Binarisierungsuntermodul (631), das konfiguriert ist zum Durchführen einer Binarisierungsverarbeitung am zweiten Informationsbereich zum Erhalten eines binarisierten zweiten Informationsbereichs vor dem Schritt des Berechnens des ersten und/oder zweiten Histogramms;
ein erstes Berechnungsuntermodul (632), das konfiguriert ist zum Berechnen eines ersten Histogramms des zweiten Informationsbereichs in einer horizontalen Richtung, wobei das erste Histogramm Folgendes aufweist: eine vertikale Koordinate jeder Pixelzeile und einen Summenwert von Vordergrundfarbpixeln in jeder Pixelzeile;
ein Reihenerkennungsuntermodul (633), das konfiguriert ist zum Erkennen von n Zeilen von Textbereichen auf Basis von Sätzen aufeinanderfolgender Zeilen im ersten Histogramm, wobei die Sätze aufeinanderfolgender Zeilen jeweils aus Zeilen zusammengesetzt sind, in denen die Summenwerte von Vordergrundfarbpixeln größer als ein erster Schwellenwert sind, wobei n eine positive Ganzzahl ist;
ein Reihenabstanderkennungsmodul (910), das konfiguriert ist zum Erkennen eines Zeilenabstands zwischen zwei benachbarten Zeilen von Textbereichen auf Basis der Sätze aufeinanderfolgender Zeilen im ersten Histogramm;
ein Verwerfungsmodul (920), das konfiguriert ist zum Verwerfen einer Textbereichszeile, die näher an einem oberen Rand oder an einem unteren Rand des zweiten Informationsbereichs ist, falls der Zeilenabstand größer als einer dritter Schwellenwert ist,
**dadurch gekennzeichnet, dass** das Erkennungsmodul (630) ferner Folgendes umfasst:
ein zweites Berechnungsuntermodul (634), das konfiguriert ist zum Berechnen eines zweiten Histogramms für eine i-te Textbereichszeile in einer vertikalen Richtung, wobei das zweite Histogramm Folgendes aufweist: eine horizontale Koordinate jeder Pixelspalte und einen Summenwert von Vordergrundfarbpixeln in jeder Pixelspalte, wobei n≥i≥1 ist und i eine positive Ganzzahl ist;
ein Zeichenerkennungsuntermodul (635), das konfiguriert ist zum Erkennen von nᵢ Zeichenzonen auf Basis von Sätzen aufeinanderfolgender Spalten im zweiten Histogramm, wobei die Sätze aufeinanderfolgender Spalten jeweils aus Spalten zusammengesetzt sind, in denen die Summenwerte von Vordergrundfarbpixeln größer als ein zweiter Schwellenwert sind;
ein Zeichenabstanderkennungsmodul (930), das konfiguriert ist zum Erkennen eines Zeichenabstands zwischen zwei benachbarten Zeichenzonen auf Basis der Sätze aufeinanderfolgender Spalten im zweiten Histogramm;
ein Texterkennungsmodul (940), das konfiguriert ist zum Erkennen einer Zeichenzone rechts von den zwei benachbarten Zeichenzonen als die erste Zeichenzone in einer aktuellen Textbereichszeile, falls die zwei benachbarten Zeichenzonen links von dem zweiten Informationsbereich sind und der Zeilenabstand zwischen den benachbarten Zeichenzonen größer als ein vierter Schwellenwert ist; und
ein Einzelzeichenerkennungsmodul (950), das konfiguriert ist zum Erkennen einer Zeichenzone links von den zwei benachbarten Zeichenzonen als die letzte Zeichenzone in der aktuellen Textbereichszeile, falls die zwei benachbarten Zeichenzonen rechts von dem zweiten Informationsbereich sind und der Zeichenabstand zwischen den benachbarten Zeichenzonen größer als ein fünfter Schwellenwert ist.

5. Vorrichtung nach Anspruch 4, wobei die Bereichsposition durch eine Vertexkoordinate repräsentiert wird,
wobei das Bestimmungsmodul (620) konfiguriert ist zum Bestimmen des zweiten Informationsbereichs gemäß wenigstens zwei Vertexkoordinaten des ersten Informationsbereichs und einer vorbestimmten relativen Positionsbeziehung, wobei die relative Positionsbeziehung eine relative Positionsbeziehung zwischen den Vertexkoordinaten und dem zweiten Informationsbereich ist.

6. Verfahren nach Anspruch 5, wobei der erste Informationsbereich ein Personalausweisnummernbereich auf einer Ausweis- (ID) -karte der zweiten Generation ist, die wenigstens zwei Vertexkoordinaten zwei Vertexkoordinaten des Personalausweisnummernbereichs sind und der zweite Informationsbereich ein Adressinformationsbereich auf der Ausweiskarte der zweiten Generation ist,
wobei das Bestimmungsmodul (620) Folgendes umfasst:
ein erstes Bestimmungsuntermodul (621), das konfiguriert ist zum Bestimmen eines unteren Rands des Adressinformationsbereichs gemäß einer vertikalen Koordinate einer Vertexkoordinate in den zwei Vertexkoordinaten, die näher am Adressinformationsbereich ist;
ein zweites Bestimmungsuntermodul (622), das konfiguriert ist zum Bestimmen eines oberen Rands des Adressinformationsbereichs gemäß der vertikalen Koordinate der näheren Vertexkoordinate und einer vorbestimmten Höhe;
ein drittes Bestimmungsuntermodul (623), das konfiguriert ist zum Bestimmen eines linken Rands des Adressinformationsbereichs gemäß einer horizontalen Koordinate von einer der zwei Vertexkoordinaten und einer ersten vorbestimmten Breite;
ein viertes Bestimmungsuntermodul (624), das konfiguriert ist zum Bestimmen eines rechten Rands des Adressinformationsbereichs gemäß einer horizontalen Koordinate von einer der zwei Vertexkoordinaten und einer zweiten vorbestimmten Breite; und
ein Segmentierungsuntermodul (625), das konfiguriert ist zum Bestimmen des Adressinformationsbereichs gemäß dem unteren Rand, dem oberen Rand, dem linken Rand und dem rechten Rand.

7. Nichtflüchtiges computerlesbares Speichermedium mit darauf gespeicherten Anweisungen, die bei Ausführung durch einen Prozessor den Prozessor zum Durchführen des Verfahrens nach einem der Ansprüche 1 bis 4 veranlassen.

## Revendications

1. Procédé d'extraction de région mis en oeuvre par ordinateur, comprenant :
l'obtention (101) d'une position de région d'une première région d'informations dans une image d'identification, la première région d'informations étant une région présentant des informations textuelles ;
la détermination (102) d'une seconde région d'informations en fonction de la position de région de la première région d'informations ;
la segmentation (103) de la seconde région d'informations afin d'obtenir au moins une zone de caractères,
dans lequel la segmentation (103) de la seconde région d'informations afin d'obtenir au moins une zone de caractères comprend :
l'exécution (203a) d'un traitement de binarisation sur la seconde région d'informations afin d'obtenir une seconde région d'informations binarisée ;
le calcul (203b) d'un premier histogramme de la seconde région d'informations dans un sens horizontal, le premier histogramme comportant : une coordonnée verticale de chaque rangée de pixels et une valeur cumulative de pixels de couleur de premier plan dans chaque rangée de pixels;
la reconnaissance (203c) de n rangées de régions de texte sur la base d'ensembles de rangées consécutifs dans le premier histogramme, chacun des ensembles de rangées consécutifs étant composé de rangées dans lesquelles les valeurs cumulatives de pixels de couleur de premier plan sont supérieures à un premier seuil, où n est un entier positif ;
la reconnaissance (401) d'un espacement de rangées entre deux rangées de régions de texte adjacentes sur la base des ensembles de rangées consécutifs dans le premier histogramme ;
le rejet (402) d'une rangée de région de texte se trouvant plus près soit d'un bord supérieur, soit d'un bord inférieur de la seconde région d'informations dans le cas où l'espacement de rangées est supérieur à un troisième seuil,
**caractérisé en ce que**
la segmentation (103) de la seconde région d'informations afin d'obtenir au moins une zone de caractères comprend en outre :
le calcul (203d) d'un second histogramme pour une i^{ème} rangée de région de texte dans un sens vertical, le second histogramme comportant : une coordonnée horizontale de chaque colonne de pixels et une valeur cumulative de pixels de couleur de premier plan dans chaque colonne de pixels, où n ≥ i ≥ 1 et i est un entier positif ; et
la reconnaissance (203e) de n; zones de caractères sur la base d'ensembles de colonnes consécutifs dans le second histogramme, chacun des ensembles de colonnes consécutifs étant composé de colonnes dans lesquelles les valeurs cumulatives de pixels de couleur de premier plan sont supérieures à un deuxième seuil ;
la reconnaissance (501) d'un espacement de caractères entre deux zones de caractères adjacentes sur la base des ensembles de colonnes consécutifs dans le second histogramme ;
la reconnaissance (502) d'une zone de caractères à droite des deux zones de caractères adjacentes comme étant la première zone de caractères dans une rangée de région de texte courante si les deux zones de caractères adjacentes se trouvent à gauche de la seconde région d'informations et l'espacement de caractères entre les zones de caractères adjacentes est supérieur à un quatrième seuil ; et
la reconnaissance (503) d'une zone de caractères à gauche des deux zones de caractères adjacentes comme étant la dernière zone de caractères dans la rangée de région de texte courante si les deux zones de caractères adjacentes se trouvent à droite de la seconde région d'informations et l'espacement de caractères entre les zones de caractères adjacentes est supérieur à un cinquième seuil.

2. Procédé selon l'une quelconque des revendications précédentes, dans lequel la position de région est représentée par une coordonnée de sommet,
dans lequel la détermination (102) d'une seconde région d'informations en fonction de la position de région de la première région d'informations comprend :
la détermination (202) de la seconde région d'informations en fonction d'au moins deux coordonnées de sommet de la première région d'informations et d'une relation de positions relatives prédéterminée, dans lequel la relation de positions relatives est une relation de positions relatives entre les coordonnées de sommets et la seconde région d'informations.

3. Procédé selon la revendication 2, dans lequel la première région d'informations est une région de numéro d'identité civile dans une carte d'identité (ID) de seconde génération, les au moins deux coordonnées de sommets sont deux coordonnées de sommets de la région de numéro d'identité civile, et la seconde région d'informations est une région d'informations d'adresse dans la carte d'identité de seconde génération,
dans lequel la détermination (202) de la seconde région d'informations en fonction d'au moins deux coordonnées de sommets de la première région d'informations et d'une relation de positions relatives prédéterminée comprend :
la détermination (202a) d'un bord inférieur de la région d'informations d'adresse en fonction d'une coordonnée verticale d'une coordonnée de sommet, dans les deux coordonnées de sommets, plus proche de la région d'informations d'adresse ;
la détermination (202b) d'un bord supérieur de la région d'informations d'adresse en fonction de la coordonnée verticale de la coordonnée de sommet plus proche et d'une hauteur prédéterminée ;
la détermination (202c) d'un bord gauche de la région d'informations d'adresse en fonction d'une coordonnée horizontale de n'importe laquelle des deux coordonnées de sommets et d'une première largeur prédéterminée ;
la détermination (202d) d'un bord droit de la région d'informations d'adresse en fonction d'une coordonnée horizontale de n'importe laquelle des deux coordonnées de sommets et d'une seconde largeur prédéterminée ; et
la détermination (202e) de la région d'informations d'adresse en fonction du bord inférieur, du bord supérieur, du bord gauche et du bord droit.

4. Dispositif d'extraction, comprenant :
un module d'obtention (610), configuré pour obtenir une position de région d'une première région d'informations dans une image d'identification, la première région d'informations étant une région comportant des informations textuelles ;
un module de détermination (620), configuré pour déterminer une seconde région d'informations en fonction de la position de région de la première région d'informations ; et
un module de reconnaissance (630), configuré pour segmenter la seconde région d'informations afin d'obtenir au moins une zone de caractères,
le module de reconnaissance (630) comprenant :
un sous-module de binarisation (631), configuré pour exécuter un traitement de binarisation sur la seconde région d'informations afin d'obtenir une seconde région d'informations binarisée, avant l'étape de calcul des premier et/ou second histogrammes ;
un premier sous-module de calcul (632), configuré pour calculer un premier histogramme de la seconde région d'informations dans un sens horizontal, le premier histogramme comportant : une coordonnée verticale de chaque rangée de pixels et une valeur cumulative de pixels de couleur de premier plan dans chaque rangée de pixels ;
un sous-module de reconnaissance de rangées (633), configuré pour reconnaître n rangées de régions de texte sur la base d'ensembles de rangées consécutifs dans le premier histogramme, dans lequel chacun des ensembles de rangées consécutifs est composé de rangées dans lesquelles les valeurs cumulatives de pixels de couleur de premier plan sont supérieures à un premier seuil, où n est un entier positif ;
un module de reconnaissance d'espacement de rangées (910), configuré pour reconnaître un espacement de rangées entre deux rangées de régions de texte adjacentes sur la base des ensembles de rangées consécutifs dans le premier histogramme ;
un module de rejet (920), configuré pour rejeter une rangée de région de texte située plus près d'un bord supérieur ou d'un bord inférieur de la seconde région d'informations dans le cas où l'espacement de rangées est supérieur à un troisième seuil,
**caractérisé en ce que** le module de reconnaissance (630) comprend en outre :
un second sous-module de calcul (634), configuré pour calculer un second histogramme pour une i^{ème} rangée de région de texte dans un sens vertical, le second histogramme comportant : une coordonnée horizontale de chaque colonne de pixels et une valeur cumulative de pixels de couleur de premier plan dans chaque colonne de pixels, où n ≥ i ≥ 1 et i est un entier positif ;
un sous-module de reconnaissance de caractères (635), configuré pour reconnaître n; zones de caractères sur la base d'ensembles de colonnes consécutifs dans le second histogramme, chacun des ensembles de colonnes consécutifs étant composé de colonnes dans lesquelles les valeurs cumulatives de pixels de couleur de premier plan sont supérieures à un deuxième seuil ;
un module de reconnaissance d'espacement de caractères (930), configuré pour reconnaître un espacement de caractères entre deux zones de caractères adjacentes sur la base des ensembles de colonnes consécutifs dans le second histogramme ;
un module de reconnaissance de texte (940), configuré pour reconnaître une zone de caractères à droite des deux zones de caractères adjacentes comme étant la première zone de caractères dans une rangée de région de texte courante si les deux zones de caractères adjacentes se trouvent à gauche de la seconde région d'informations et l'espacement de caractères entre les zones de caractères adjacentes est supérieur à un quatrième seuil ; et
un module de reconnaissance de caractère unique (950), configuré pour reconnaître une zone de caractères à gauche des deux zones de caractères adjacentes comme étant la dernière zone de caractères dans la rangée de région de texte courante si les deux zones de caractères adjacentes se trouvent à droite de la seconde région d'informations et l'espacement de caractères entre les zones de caractères adjacentes est supérieur à un cinquième seuil.

5. Dispositif selon la revendication 4, dans lequel la position de région est représentée par une coordonnée de sommet,
dans lequel le module de détermination (620) est configuré pour déterminer la seconde région d'informations en fonction d'au moins deux coordonnées de sommets de la première région d'informations et d'une relation de positions relatives prédéterminée, la relation de positions relatives étant une relation de positions relatives entre les coordonnées de sommet et la seconde région d'informations.

6. Dispositif selon la revendication 5, dans lequel la première région d'informations est une région de numéro d'identité civile dans une carte d'identité (ID) de seconde génération, les au moins deux coordonnées de sommets sont deux coordonnées de sommet de la région de numéro d'identité civile, et la seconde région d'informations est une région d'informations d'adresse dans la carte d'identité de seconde génération,
dans lequel le module de détermination (620) comprend :
un premier sous-module de détermination (621), configuré pour déterminer un bord inférieur de la région d'informations d'adresse en fonction d'une coordonnée verticale d'une coordonnée de sommet, dans les deux coordonnées de sommets, plus proche de la région d'informations d'adresse ;
un deuxième sous-module de détermination (622), configuré pour déterminer un bord supérieur de la région d'informations d'adresse en fonction de la coordonnée verticale de la coordonnée de sommet plus proche et d'une hauteur prédéterminée ;
un troisième sous-module de détermination (623), configuré pour déterminer un bord gauche de la région d'informations d'adresse en fonction d'une coordonnée horizontale de n'importe laquelle des deux coordonnées de sommets et d'une première largeur prédéterminée ;
un quatrième sous-module de détermination (624), configuré pour déterminer un bord droit de la région d'informations d'adresse en fonction d'une coordonnée horizontale de n'importe laquelle des deux coordonnées de sommets et d'une seconde largeur prédéterminée ; et
un sous-module de segmentation (625), configuré pour déterminer la région d'informations d'adresse en fonction du bord inférieur, du bord supérieur, du bord gauche et du bord droit.

7. Support de mémorisation non transitoire lisible par ordinateur sur lequel sont mémorisées des instructions qui, à leur exécution par un processeur, amènent le processeur à mettre en oeuvre le procédé selon l'une quelconque des revendications 1 à 4.
